# EUROPEAN PATENT SPECIFICATION

(11) **EP 1 470 893 B1**
(45) Date of publication and mention of the grant of the patent: **21.06.2006**
(21) Application number: 04009718.0
(22) Date of filing: 23.04.2004
(51) Int. Cl.: B24B 37/04, B24D 13/14, B24D 3/26

(54) **Polishing pad and chemical mechanical polishing method**
Polierkissen und chemisch-mechanisches Polierverfahren
Tampon de polissage et procédé de polissage mécano-chimique

(30) Priority: 25.04.2003 JP 2003122731
(43) Date of publication of application: 27.10.2004
(73) Proprietor: JSR Corporation, Tokyo 104-0045 (JP)
(72) Inventor: Shiho, Hiroshi, Tokyo, 104-0045 (JP); Okamoto, Takahiro, Tokyo, 104-0045 (JP); Hasegawa, Kou, Tokyo, 104-0045 (JP); Kawahashi, Nobuo, Tokyo, 104-0045 (JP)
(74) Representative: TBK-Patent

(56) References cited:
- EP-A- 1 201 368
- EP-A- 1 295 680
- US-B1- 6 168 508

## Description

### Field of the Invention

The present invention relates to a polishing pad, especially a polishing pad for polishing an insulating film and a metal film, and a chemical mechanical polishing method. More specifically, it relates to a polishing pad having an excellent removal rate and capable of polishing for providing excellent planarity, especially a polishing pad having an excellent removal rate for both an insulating film and a metal film, and a chemical mechanical polishing method.

The present invention is widely used to polish the surface of a semiconductor wafer, etc.

### Description of the Prior Art

CMP (Chemical Mechanical Polishing) has been attracting much attention as a polishing technique capable of forming a surface having high planarity. In CMP, slurry which is an aqueous dispersion of abrasive particles is dropped on the surface of a polishing pad from above while the polishing pad and the surface to be polished are brought into slide contact with each other.

In this CMP, the removal rate is one of the factors for greatly affecting productivity. It is said that this removal rate can be greatly improved by holding a large amount of slurry on the surface of a polishing pad.

Heretofore, CMP polishing pads have been made of foamed polyurethane having pores of several tens of micrometers in diameter. Since polyurethane is generally inferior in water resistance, the above polishing pads have a durability problem. When an elastomer such as butadiene rubber having excellent water resistance is used, the obtained polishing pad has poor wettability by water and a low removal rate. When a foamed product is used to hold slurry, satisfactory planarity is not obtained.

EP-A-1 295 680 is directed to a polishing pad for a semiconductor wafer comprising a supporting and a polishing layer. The material of the supporting layer of this pad may be a combination of a diene-based elastomer and a polymer which may be modified by an anhydride.

EP-A-1 201 368 describes a polishing pad, which is formed from a composition comprising a crosslinkable elastomer [A], e.g. butadiene rubber, and a water-insoluble substance [B], e.g. a maleic anhydride-modified polyethylene or polypropylene. The amount of [A] is 40 to 99.9 wt% and the amount of [B] is 0.1 to 60 wt%.

US-B-6,168,508 discloses a polishing pad for chemical-mechanical polishing having at least two different polishing areas on its surface, wherein the specific gravity of the polishing pad material is between 0.6 to 1.5 g/cm³.

### Summary of the Invention

In view of the above situation, it is an object of the present invention to provide a polishing pad having an excellent removal rate and capable of polishing for providing excellent planarity.

It is another object of the present invention to provide a polishing pad having an excellent removal rate for both an insulating film and a metal film.

It is still another object of the present invention to provide a chemical mechanical polishing method using the polishing pad of the present invention.

Other objects and advantages of the present invention will become apparent from the following description.

According to the present invention, firstly, the above objects and advantages of the present invention are attained by a polishing pad 1.

According to the present invention, secondly, the above objects and advantages of the present invention are attained by a chemical mechanical polishing method, defined according to claim 9.

### Brief Description of the Drawings

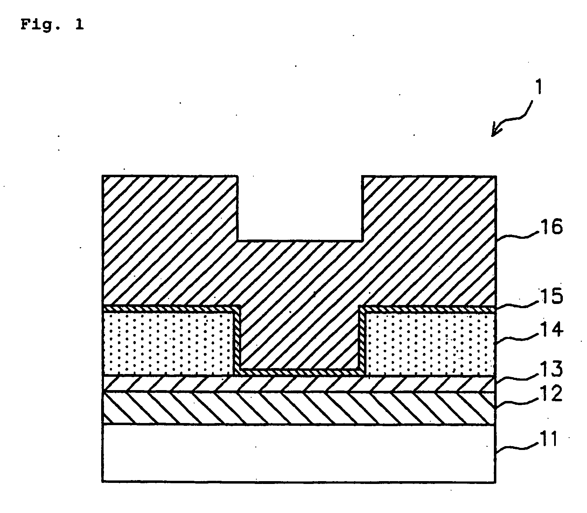

Fig. 1 is a sectional view of a material (wafer) to be polished used in a chemical mechanical polishing method;

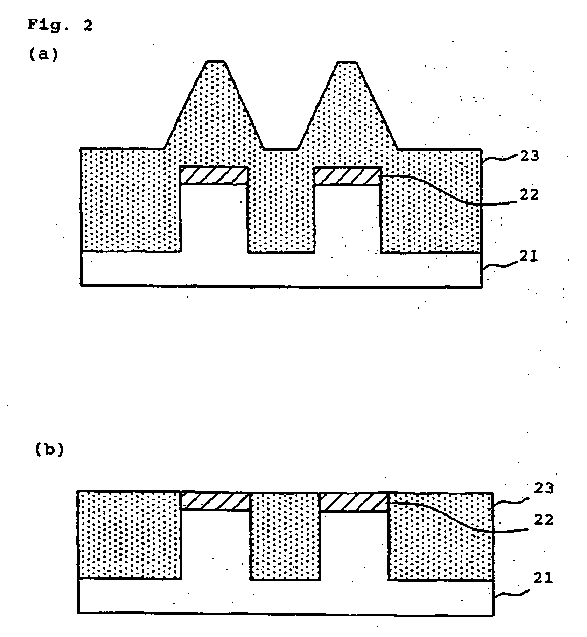

Figs. 2 are sectional views of another material to be polished by chemical mechanical polishing, wherein Fig. 2 (a) is a sectional view of the material to be polished before polishing for the separation of micro-elements and Fig. 2(b) is a sectional view of the separated micro-elements after polishing; and

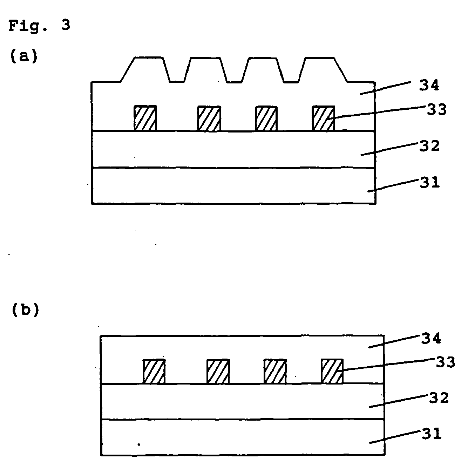

Figs. 3 are sectional views of another material to be polished by chemical mechanical polishing, wherein Fig. 3(a) is a sectional view of the material to be polished for flattening an interlayer insulating film before polishing and Fig. 3(b) is a sectional view of the flattened interlayer insulating film after polishing.

### Detailed Description of the Preferred Embodiment

The present invention will be described in detail hereinunder.

The above "(A) crosslinked diene elastomer" is an elastomer which contains the polymerization unit of a diene monomer and has a crosslinked structure. The polymerization unit of a diene monomer may or may not be hydrogenated after polymerization. The crosslinked diene elastomer (A) contains the polymerization unit of a diene monomer in an amount of 40 to 100 mass%, more preferably 60 to 100 mass%, much more preferably 80 to 100 mass% based on 100 mass% of the elastomer.

The crosslinked diene elastomer (A) is, for example, a crosslinked butadiene elastomer or crosslinked isoprene elastomer. Examples of the crosslinked butadiene elastomer include crosslinked rubbers obtained by crosslinking a polymer such as butadiene rubber, 1,2-polybutadiene, acrylonitrile-butadiene rubber, styrene-butadiene rubber or styrene-butadiene-styrene (SBS) block copolymer, and hydrogenated polymers thereof such as SBS hydrogenated block copolymer (SEBS). These elastomers may be used alone or in combination of two or more. Examples of the isoprene elastomer include crosslinked rubbers obtained by crosslinking a polymer such as isoprene rubber, styrene-isoprene rubber or isobutylene-isoprene rubber, and hydrogenated products thereof. These elastomers may be used alone or in combination of two or more. Out of these crosslinked diene elastomers, crosslinked 1,2-polybutaidene is particularly preferred because a composition having high hardness is obtained.

The crosslinking method for obtaining the above crosslinked elastomer (A) is not particularly limited but a crosslinking agent is generally used for crosslinking. The crosslinking agent may be sulfur or an organic peroxide but an organic peroxide is preferred because an impurity such as sulfur is undesirable for the polishing of a semiconductor. Examples of the organic peroxide include dicumyl peroxide, di-t-butyl peroxide, diethyl peroxide, diacetyl peroxide and diacyl peroxide. They may be used alone or in combination of two or more.

The above "(B) polymer having an acid anhydride structure" is a polymer having an acid anhydride structure represented by the following formula (1).

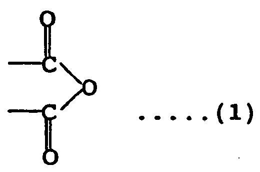

The polymer having an acid anhydride structure (B) is, for example, one of (1) a polymer having an acid anhydride structure in the main chain, (2) a polymer having an acid anhydride structure not in the main chain but only in the side chain, and (3) a polymer having an acid anhydride structure in both the main chain and the side chain.

The above polymer having an acid anhydride structure in the main chain (1) can be obtained as a homopolymer of a monomer having an acid anhydride structure or a copolymer of a monomer having an acid anhydride structure and a monomer having no acid anhydride structure.

The latter copolymer comprising a monomer having no acid anhydride structure contains a polymerization unit derived from a monomer having an acid anhydride structure in an amount of preferably 0.1 to 40 molt, more preferably 0.5 to 30 mol%, particularly preferably 1.0 to 25 mol% based on the total of the polymerization units of the both monomers.

Examples of the above monomer having an acid anhydride structure include maleic anhydride, itaconic anhydride, citraconic anhydride and endomethylenetetrahydrophthalic anhydride. Examples of the above monomer having no acid anhydride structure include conjugated diene compounds, aromatic monomers and (meth)acrylate compounds.

The conjugated diene compounds include 1,3-butadiene, isoprene, 2,3-dimethyl-1,3-butadiene and chloroprene, the aromatic monomers include styrene, α-methylstyrene, o-hydroxystyrene, m-hydroxystyrene and p-hydroxystyrene, and the (meth)acrylate compounds include methyl (meth)acrylate, ethyl (meth)acrylate, 2-hydroxymethyl (meth)acrylate, 3-hydroxypropyl (meth)acrylate, dimethylaminomethyl (meth)acrylate and dimethylaminoethyl (meth)acrylate.

The above polymer having an acid anhydride structure not in the main chain but only in the side chain (2) can be obtained by modifying a polymer having no acid anhydride structure with a monomer having an acid anhydride structure. The "modification" can be realized by a method in which a side chain having an acid anhydride structure is added to a polymer having no acid anhydride structure by heating the polymer having no acid anhydride structure in the presence of a monomer having an acid anhydride group and a peroxide such as hydrogen peroxide or organic peroxide, or a method in which a side chain having an acid anhydride structure is added to a polymer having no acid anhydride structure by heating the polymer having no acid anhydride structure in the presence of a compound having at least two acid anhydride structures in the molecule and/or a compound having an acid anhydride structure and a carboxyl group in the molecule and a catalyst such as acid, alkali or metal catalyst.

The monomer having an acid anhydride group is used in an amount of preferably 0.1 to 150 parts by weight, more preferably 0.5 to 110 parts by weight, particularly preferably 1.0 to 75 parts by weight based on 100 parts by weight of the monomer having no acid anhydride structure.

The above polymer having no acid anhydride structure in the main chain is, for example, a polyolefin, diene (co)polymer, hydrogenated product of a diene (co)polymer or (meth)acrylate polymer. Examples of the above polyolefin include polyethylene, polypropylene, polybutene, ethylene-propylene copolymer and ethylene-butene copolymer, and examples of the above diene(co)polymer include butadiene rubber, 1,2-polybutadiene, styrene-butadiene copolymer and isoprene rubber.

The above (meth)acrylate is a homopolymer or copolymer of a (meth)acrylic ester. Examples of the (meth)acrylic ester include methyl (meth)acrylate, γ-(meth)acryloxypropyl(dimethoxy)methylsilane, γ-oxypropyltrimethoxy(meth)acrylate, glycidyl (meth)acrylate, 2-hydroxymethyl (meth)acrylate, 3-hydroxypropyl (meth)acrylate, dimethylaminomethyl (meth)acrylate and dimethylaminoethyl (meth)acrylate.

Examples of the above monomer having an acid anhydride structure are the same as those enumerated as the monomer having an acid anhydride group used for the synthesis of the polymer having an acid anhydride structure in the main chain (1).

Examples of the above compound having at least two acid anhydride structures in the molecule include pyromellitic anhydride and 3,3',4,4'-benzophenonetetracarboxylic dianhydride, and examples of the above compound having an acid anhydride structure and a carboxyl group in the molecule include trimellitic anhydride.

The above polymer having an acid anhydride structure in both the main chain and the side chain (3) can be obtained by modifying the above polymer having an acid anhydride structure in the main chain (1) with a monomer having an acid anhydride structure. In this case, modification may be carried out in the same manner as the above polymer (2).

Out of these polymers, the polymer having an acid anhydride structure not in the main chain but only in the side chain (2) is preferred, a polyolefin and a hydrogenated product of a diene (co)polymer modified by an dicarboxylic anhydride having a carbon-carbon double bond are more preferred, and maleic anhydride modified polyethylene, maleic anhydride modified polypropylene and maleic anhydride modified styrene-butadiene copolymer are particularly preferred.

The acid value of the above polymer (B), that is, the amount (mg) of potassium hydroxide required for the neutralization of a free fatty acid contained in 1 g of a lipid is 1 to 300 mg KOH/g.

When the acid value is smaller than 0.1 mg KOH/g, no hydrophilic nature is obtained and the removal rate may lower. When the acid value is larger than 500 mg KOH/g, hygroscopicity is extremely rised, whereby the hardness of the polishing pad may be lowered by moisture absorption disadvantageously.

As for this acid value, the acid anhydride group is ring-opening under the measurement conditions of this acid value and calculated as an acid.

The above component (B) is generally dispersed in the component (A) as an island to form a sea-island structure as a whole, and these components form a matrix.

As for the amounts of the component (A) and the component (B), the amount of the component (A) is 70 to 99.9 mass%, preferably 75 to 99.5 mass%, more preferably 80 to 99 mass%, and the content of the component (B) is 0.1 to 30 mass%, preferably 0.5 to 25 mass%, more preferably 1 to 20 mass% based on 100 mass% of the total of the components (A) and (B). When the amount of the component (B) is smaller than 0.1 mass%, the effect of improving the removal rate may not be fully obtained. When the amount of the component (B) is larger than 30 mass%, the effect of improving the removal rate is saturated and the moldability and strength of the polishing pad formed from the resulting composition may lower according to the substances contained.

In the present invention, optionally, a hydrophilic substance having a functional group which differs from the components (A) and (B) may be contained in the matrix comprising the above components (A) and (B) to improve compatibility with slurry.

The hydrophilic substance having a functional group is a (co) polymer of a monomer (s) having a functional group, or a polymer obtained by modifying the same material as the above component (A) with at least one selected from carboxyl group, hydroxyl group, epoxy group and amino group. This polymer may or may not be crosslinked but preferably crosslinked. As the hydrophilic substance is preferably used a polymer obtained by polymerizing monomers having a functional group or a polymer having an extremely high content of a functional group-containing component, for example, a polymer comprising a monomer having a functional group in an amount of 80 mol% or more, as described hereinafter.

The above (co)polymer of a monomer(s) having a functional group is, for example, a (co)polymer comprising (a) the polymerization unit of a monomer having one polymerizable unsaturated group and at least one functional group selected from the group consisting of carboxyl group, amino group, hydroxyl group, epoxy group, sulfonic acid group and phosphoric acid group (to be referred to as "monomer (a)), and/or (b) the polymerization unit of a monomer having at least two polymerizable unsaturated groups (crosslinkable monomer, to be referred to as "monomer (b)" hereinafter), or a copolymer comprising the polymerization unit(s) of the above monomer (a) and/or the above monomer (b) and the polymerization unit of other copolymerizable monomer.

Examples of the monomer having a carboxyl group as the monomer (a) include (1)unsaturated carboxylic acids such as (meth)acrylic acid, maleic acid, fumaric acid, itaconic acid, tetraconic acid and cinnamic acid, (2) free carboxyl group-containing esters such as monoesters of a nonpolymerizable polycarboxylic acid such as phthalic acid, succinic acid or adipic acid and a hydroxyl group-containing unsaturated compound such as (meth)allyl alcohol or 2-hydroxyethyl (meth)acrylate, and (3) salt compounds thereof. Out of these, unsaturated carboxylic acids are preferred.

The monomer having an amino group is preferably a monomer having a tertiary amino group, as exemplified by dialkylaminoalkyl (meth)acrylates such as dimethylaminomethyl (meth)acrylate, diethylaminomethyl (meth)acrylate, 2-dimethylaminoethyl (meth)acrylate, 2-diethylaminoethyl (meth)acrylate, 2-(di-n-propylamino)ethyl (meth)acrylate, 2-dimethylaminopropyl (meth)acrylate, 2-diethylaminopropyl (meth)acrylate, 2-(di-n-propylamino)propyl (meth)acrylate, 3-dimethylaminopropyl (meth)acrylate, 3-diethylaminopropyl (meth)acrylate and 3-(di-n-propylamino)propyl (meth)acrylate; N-dialkylaminoalkyl group-containing unsaturated amides such as N-dimethylaminomethyl (meth)acrylamide, N-diethylaminomethyl (meth)acrylamide, N-(2-dimethylaminoethyl) (meth) acrylamide, N-(2-diethylaminoethyl) (meth)acrylamide, N-(2-dimethylaminopropyl) (meth)acrylamide, N-(2-diethylaminopropyl) (meth)acrylamide, N-(3-dimethylaminopropyl) (meth)acrylamide and N-(3-diethylaminopropyl) (meth)acrylamide; and tertiary amino group-containing vinyl aromatic compounds such as N,N-dimethyl-p-aminostyrene, N,N-diethyl-p-aminostyrene, dimethyl(p-vinylbenzyl)amine, diethyl(p-vinylbenzyl)amine, dimethyl(p-vinylphenethyl)amine, diethyl(p-vinylphenethyl)amine, dimethyl(p-vinylbenzyloxymethyl)amine, dimethyl[2-(p-vinylbenzyloxy)ethyl]amine, diethyl(p-vinylbenzyloxymethyl)amine, diethyl[2-(p-vinylbenzyloxy)ethyl]amine, dimethyl(p-vinylphenethyloxymethyl)amine, dimethyl[2-(p-vinylphenethyloxy)ethyl]amine, diethyl(p-vinylphenethyloxymethyl)amine, diethyl[2-(p-vinylphenethyloxy)ethyl]amine, 2-vinylpyridine, 3-vinylpyridine and 4-vinylpyridine. Out of these, dialkylaminoalkyl (meth)acrylates and tertiary amino group-containing vinyl aromatic compounds are preferred.

Examples of the monomer having a hydroxyl group include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; mono(meth)acrylates of a polyalkylene glycol (the number of alkylene glycol units is preferably 2 to 23) such as polyethylene glycol and polypropylene glycol; hydroxyl group-containing unsaturated amides such as N-hydroxymethyl (meth)acrylamide, N-(2-hydroxyethyl) (meth)acrylamide and N,N-bis(2-hydroxyethyl) (meth)acrylamide; hydroxyl group-containing vinyl aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene and p-vinylbenzyl alcohol; and (meth)allyl alcohols. Out of these, hydroxylalkyl (meth)acrylates and hydroxyl group-containing vinyl aromatic compounds are preferred.

Examples of the monomer having an epoxy group include (meth)allyl glycidyl ether, glycidyl (meth)acrylate and 3,4-oxycyclohexyl (meth)acrylate.

Examples of the monomer having a sulfonic acid group include (1) (meth)acrylamide monomers such as 2-(meth)acrylamidoethanesulfonic acid, 2-(meth)acrylamidopropanesulfonic acid, 3-(meth)acrylamidopropanesulfonic acid, 2-(meth)acrylamido-2-methylpropanesulfonic acid and 3-(meth)acrylamido-2-methylpropanesulfonci acid; (2) (meth)acrylate monomers such as ethyl (meth)acrylate 2-sulfonate, propyl (meth)acrylate 2-sulfonate, propyl (meth)acrylate 3-sulfonate and ethyl (meth)acrylate 1,1-dimethyl-2-sulfonate; (3) vinyl aromatic compounds monomers such as p-vinylbenzenesulfonic acid and p-isopropenylbenzenesulfonic acid; and (4) salt compounds thereof.

Examples of the monomer having a phosphoric acid group include phosphoric ethylene (meth)acrylate, phosphoric trimethylene (meth)acrylate, phosphoric tetramethylene (meth)acrylate, phosphoric propylene (meth)acrylate, phosphoric bis(ethylene(meth)acrylate), phosphoric bis(trimethylene (meth)acrylate), phosphoric bis(tetramethylene (meth)acrylate), phosphoric diethylene glycol (meth)acrylate, phosphoric triethylene glycol (meth)acrylate, phosphoric polyethylene glycol (meth)acrylate, phosphoric bis(diethylene glycol (meth)acrylate), phosphoric bis(triethylene glycol (meth)acrylate), phosphoric bis(polyethylene glycol (meth)acrylate) and salt compounds thereof.

Examples of the above monomer (b) include ethylene glycol di(meth)acrylate, propylene glycol di(meth)acrylate, 1,4-butanediol di(meth)acrylate, 1,6-hexanediol di(meth)acrylate, trimethylolpropane di(meth)acrylate, trimethylolpropane tri(meth)acrylate, pentaerythritol tri(meth)acrylate, pentaerythritol tetra(meth)acrylate, divinylbenzene, diisopropenylbenzene and trivinylbenzene. They may be used alone or in combination of two or more.

The above hydrophilic substance can be manufactured by suitably combining the above monomers (a) and (b) with a monomer other than the monomers (a) and (b). The polymerization of these monomers is not particularly limited and may be radical (co)polymerization, anion (co)polymerization or cation (co)polymerization. The resulting copolymer may be a random copolymer, block copolymer or graft copolymer.

The amount of the above hydrophilic substance is preferably 50 mass% or less, more preferably 30 mass% or less, particularly preferably 15 mass% or less based on 100 mass% of the total of the above components (A) and (B) and the hydrophilic substance. They form a matrix, that is, a medium for dispersing water-soluble particles, etc.

A water-soluble substance (C) is preferably dispersed in the matrix material (resin material) comprising the above components (A) and (B) and optionally the above hydrophilic substance.

The water-soluble substance (C) can form pores for holding slurry when polishing is carried out with the slurry after it is released from the surface of the matrix material by its contact with water. The average pore diameter of the pores formed after the water-soluble substance is released from the polishing pad, that is, the size (average diameter) of this water-soluble substance contained in the matrix before release is preferably 0.1 µm to 500 µm, more preferably 0.5 µm to 300 µm, much more preferably 5 µm to 100 µm.

The water-soluble substance includes what is swollen or gelled by its contact with water and can be thereby released, such as a water-absorbing resin besides a water-soluble substance such as a water-soluble polymer. This water-soluble substance may dissolve or swell in a medium comprising water as the main component, methanol, etc. This water-soluble substance is generally dispersed in the matrix material as a dispersion.

The water-soluble substance (C) is generally solid but may be liquid. The solid water-soluble substance may be particulate, fibrous such as whisker-shaped or linear, or odd-shaped such as tetrapod-shaped.

The average particle diameter of the water-soluble particles is, for example, 0.1 µm to 500 µm, preferably 0.5 µm to 300 µm, more preferably 5 µm to 100 µm. When this average particle diameter is smaller than 0.1 µm, the formed pores are small and a polishing pad which can hold abrasive particles completely may not be obtained. When the average particle diameter is larger than 500 µm, the mechanical strength of the obtained polishing pad may lower. The average particle diameter is the average value of the maximum lengths of the water-soluble substances contained in the matrix.

This water-soluble substance (C) may be organic or inorganic. It is preferably organic.

Examples of the organic water-soluble substance include dextrin, cyclodextrin, mannitol, saccharides such as lactose, celluloses such as hydroxypropyl cellulose and methyl cellulose, starch, protein, polyvinyl alcohol, polyvinyl pyrrolidone, polyvinyl sulfonic acid, polyacrylic acid, polyethylene oxide, water-soluble photosensitive resin and sulfonated polyisoprene. They may used alone or in combination of two or more.

Examples of the inorganic water-soluble substance include potassium acetate, potassium nitrate, potassium carbonate, potassium hydrogencarbonate, potassium bromide, potassium phosphate, potassium sulfate, magnesium sulfate, magnesium nitrate and calcium nitrate. They may be used alone or in combination of two or more.

Further, the liquid water-soluble substance is not limited to a particular kind but preferably has no bad influence upon polishing efficiency by dissolution into the slurry during polishing. Examples of the liquid water-soluble substance include organic acids such as formic acid, acetic acid, and oxidizing agents such as aqueous solution of hydrogen peroxide, aqueous solution of peracetic acid and nitric acid.

The amount of the water-soluble substance (C) is preferably 50 vol% or less, more preferably 0.1 to 40 vol%, much more preferably 1 to 30 vol%, particularly preferably 1 to 20 vol% based on 100 vol% of the above matrix material. When the amount of the water-soluble substance (C) is larger than 50 vol%, the hardness and mechanical strength of the obtained polishing pad may not be maintained at appropriate values.

The water-soluble substance (C) is dispersed in the matrix material. In the polishing pad obtained from this composition for a polishing pad, pores are formed by the dissolution of the water-soluble substance (C) existent in the outermost surface layer when it contacts water. The pores hold the slurry and retain the residual dust after polishing temporarily. The water-soluble substance dissolves or swells and releases from the matrix material when it contact the slurry which is an aqueous dispersion in the polishing pad.

It is preferred that the water-soluble substance (C) should dissolve in water only when it is exposed to the surface layer of the polishing pad and should not absorb moisture or swell when it is existent in the interior of the polishing pad. Therefore, the water-soluble substance (C) preferably has an outer shell for suppressing moisture absorption on at least part of its outermost portion. This outer shell may be physically adsorbed to the water-soluble substance (C), chemically bonded to the water-soluble substance (C), or in contact with the water-soluble substance (C) by physical adsorption and chemical bonding. The outer shell is made of epoxy resin, polyimide, polyamide or polysilicate. Even when it is formed on only part of the water-soluble substance (C), the above effect can be fully obtained.

In the polishing pad, the above water-soluble substance (C) has the function of increasing the hardness of the polishing pad in addition to the function of forming pores. For instance, the Shore D hardness of the entire polishing pad is increased to 35 to 100. Pressure to be applied to the surface to be polished on the polishing pad can be made large by increasing this hardness of the polishing pad. As a result, not only the removal rate is improved but also high planarity is obtained. Therefore, this water-soluble substance (C) is particularly preferably a solid substance which can ensure sufficiently high hardness for the polishing pad.

At least one of an oxidizing agent, organic acid, alkali metal hydroxide and acid, pH modifier, surfactant and scratch prevention agent all of which have been contained in slurry may be contained in the polishing pad of the present invention. Thereby, when this polishing pad is used, polishing can be carried out by supplying only water at the time of polishing. However, it is preferred that an abrasive and polyvalent metal ion which have been contained in slurry should not be contained. Further, various additives such as a filler, softening agent, antioxidant, ultraviolet light absorber, antistatic agent, lubricant or plasticizer may be optionally contained in the polishing pad of the present invention.

The above oxidizing agent may be used without restriction if it is water-soluble. Examples of the oxidizing agent include organic peroxides such as hydrogen peroxide, peracetic acid, perbenzoic acid and tert-butyl hydroperoxide, permanganic acid compounds such as potassium permanganate, bichromic acid compounds such as potassium bichromate, halogen acid compounds such as potassium iodate, nitric acid and nitric acid compounds such as iron nitrate, perhalogen acid compounds such as perchloric acid, transition metal salts such as potassium ferricyanide, persulfates such as ammonium persulfate, polyvalent metal salts such as iron nitrate and cerium ammonium nitrate, and heteropolyacids such as tungstosilicic acid, tungstophosphoric acid molybdosilicic acid and molybdophosphoric acid. They may be used in combination of two or more. Out of these, hydrogen peroxide and organic peroxides which do not contain metal element and whose decomposed products are harmless are particularly preferred. When a metal layer such as a film to be polished of a wafer is to be polished, the removal rate can be greatly improved by adding the oxidizing agent.

Based on 100 parts by mass (to be simply referrers to as "parts" hereinafter) of the entire polishing pad, the amount of the oxidizing agent is preferably 0 to 10 parts, particularly preferably 0 to 5 parts.

The above organic acid can stabilize the above oxidizing agent and further improve the removal rate. Examples of the organic acid include paratoluenesulfonic acid, dodecylbenzenesulfonic acid, isoprenesulfonic acid, gluconic acid, lactic acid, citric acid, tartaric acid, malic acid, glycolic acid, malonic acid, formic acid, oxalic acid, succinic acid, fumaric acid, maleic acid and phthalic acid. Out of these, gluconic acid, lactic acid, citric acid, tartaric acid, malic acid, glycolic acid, malonic acid, formic acid, oxalic acid, succinic acid, fumaric acid, maleic acid and phthalic acid are preferred. Further, out of these, tartaric acid, malic acid, succinic acid and phthalic acid are particularly preferred. These organic acids may be used alone or in combination of two or more. The amount of the organic acid contained in the whole pad is preferably 0 to 10 parts, particularly preferably 0 to 5 parts based on 100 parts of the whole pad. When an organic acid is used as the water-soluble substance as described above, this organic acid may not be contained and when a large amount of the water-soluble substance is required, the organic acid may be contained. Further, tartaric acid, malic acid, succinic acid or phthalic acid all of which are preferred and solid may be blended.

The above surfactant is a cationic, anionic or nonionic surfactant. Examples of the cationic surfactant include aliphatic amine salts and aliphatic ammonium salts. Examples of the anionic surfactant include fatty acid soap; carboxylates such as alkyl ether carboxylates; sulfonates such as alkylbenzene sulfonates, allkylnaphthalene sulfonates and α-olefin sulfonates; sulfates such as higher alcohol sulfates, alkyl ether sulfates and polyoxyethylene alkylphenyl ethers; and phosphates such as alkyl phosphates. Examples of the nonionic surfactant include ethers such as polyoxyethylene alkyl ethers, ether esters such as polyoxyethylene ethers of a glycerin ester, and esters such as polyethylene glycol fatty acid esters, glycerin esters and sorbitan esters. The amount of the surfactant contained in the whole pad is preferably 0 to 10 parts, particularly preferably 0 to 5 parts based on 100 parts of the whole pad.

Examples of the above filler include materials for improving stiffness such as calcium carbonate, magnesium carbonate, talc and clay, and materials having a polishing effect such as manganese dioxide, dimanganese trioxide and barium carbonate.

The method of manufacturing this polishing pad is not particularly limited. When the method comprises a mixing step, mixing can be carried out with a known mixer such as a roll, kneader, Banbury mixer or extruder (single-screw or multi-screw). The mixed composition for a polishing pad can be processed into a desired form such as a sheet, block or film by press molding, extrusion molding or injection molding. This is cut to a desired size to obtain a polishing pad.

The method of dispersing the water-soluble substance into the matrix material is not particularly limited.

In general, the matrix material, the water-soluble substance and other additives are mixed together. The matrix material is mixed under heating so that it can be easily processed. The water-soluble substance is preferably solid at the mixing temperature. When the water-soluble substance is solid, it is easily dispersed while it has the above preferred average particle diameter irrespective of its compatibility with the above matrix material. Therefore, the type of the water-soluble substance is preferably selected according to the processing temperature of the matrix material in use.

The specific gravity of the polishing pad is 0.9 to 1.2, preferably 0.95 to 1.15. When the specific gravity is lower than 0.9, pressure to be applied to the material to be polished during polishing tends to lower and planarity may not become satisfactory. When the specific gravity is higher than 1.2, crosslinking is apt to proceed excessively and the removal rate may lower.

The Shore D hardness of the polishing pad is preferably 35 or more, more preferably 50 to 90, much more preferably 55 to 85 and generally 100 or less. When the Shore D hardness is lower than 35, pressure to be applied to the material to be polished during polishing tends to lower, the removal rate drops and planarity may not become satisfactory.

Grooves and a dot pattern may be optionally formed in a predetermined form on the polishing surface of the polishing pad in order to improve the delivery efficiency of the slurry. Further, a polishing pad having a multi-layer structure may be obtained by forming a soft layer on the rear surface, that is, the surface opposite to the polishing surface of the polishing pad. This polishing pad is not limited to a particular shape and may be disk-like, belt-like or roller-like according to a polishing machine.

The polishing pad of the present invention can be used to polish the surface of a material to be polished (also referred to as "film to be processed"). According to this polishing method, chemical mechanical polishing which provides excellent planarity can be carried out and further a higher removal rate can be obtained.

The material to be polished is not particularly limited and various materials may be used. Examples of the film to be processed include a silicon oxide film (silica film), amorphous silicon film, polycrystal silicon film, monocrystal silicon film, silicon nitride film, pure tungsten film, pure aluminum film, pure copper film and film made of an alloy of tungsten, aluminum or copper and other metal formed on a wafer in the process of manufacturing a semiconductor device such as VLSI. A film made of an oxide or nitride of a metal such as tantalum or titanium may also be used.

The polishing pad of the present invention is advantageously used in chemical mechanical polishing for the formation of buried metal wiring, the isolation of micro-device and the flattening of an interlayer insulating film.

The material to be polished for the formation of buried metal wiring is a substrate (which generally comprises at least a wafer and an insulating film formed on the front surface of the wafer, and may further comprise a barrier metal layer on the insulating film) having grooves at least on the front surface, that is, a substrate which will become a semiconductor device. In other words, it is a laminate having a desired material buried in the grooves. For the polishing of this material to be polished, the excessively buried material can be removed by the chemical mechanical polishing step using the polishing pad of the present invention to flatten the surface of the material. When the material to be polished has the barrier metal layer below the buried material, the barrier metal layer can be polished in the latter stage of the chemical mechanical polishing. After the excess buried material and the excess barrier metal layer optionally formed are removed, part of the insulating film may be optionally removed by overpolishing.

This buried type laminate is as shown in Fig. 1, for example.

That is, a laminated substrate 1 comprises a substrate 11 made of silicon or the like, an insulating film 12 formed on the silicon substrate 11, an insulating film 13 formed on the insulating film 12, an insulating film 14 formed on the insulating film 13 to form a groove, and a barrier metal film 15 formed to cover the insulating film 14 and the groove, and a film 16 made of a wiring material formed on the above barrier metal film 15 and fill the above groove (the surface of the wiring material is an uneven surface corresponding to the uneven surface of the insulating film).

The material to be polished for the isolation of micro-device is a material having a sectional structure as shown in Fig. 2(a), for example. This material may comprise a substrate 21 made of silicon, et al, and having an uneven surface, a stopper layer 22 formed on the projection portions of the substrate 21 and a buried insulating layer 23 formed to cover the depressed portions of the above substrate 21 and the stopper layer 22.

For the polishing of this material to be polished, the projection portions of the insulating layer 23 are removed, and the insulating layer 23 is flattened until the top portions of the stopper layer 22 are exposed to obtain a sectional form as shown in Fig. 2(b).

The material to be polished for the flattening of an interlayer insulating film is a material having a sectional structure as shown in Fig. 3(a). This material comprises a substrate 31 made of silicon, et al, an insulating film 32 formed on the substrate 31, wiring materials 33 formed on the insulating film 32, and an interlayer insulating film 34 formed to cover the wiring materials 33 and portions in the insulating film 32 where the wiring materials 33 are not formed.

For the polishing of the above material, the projection portions of the interlayer insulating film 34 are flattened without exposing the wiring materials 33, and a sectional structure shown in Fig. 3(b) is obtained after polishing.

Examples of the insulating material for forming the above insulating films 12, 14, 23 and 32 and the interlayer insulating film 34 include a silicon oxide (SiO₂) film, boron phosphorus silicate film (BPSG film) formed by adding small mounts of boron and phosphorus to SiO₂, insulating film called "FSG (Fluorine-doped Silicate Glass)" formed by doping SiO₂ with fluorine, and silicon oxide-based insulating film having a low dielectric constant.

Examples of the silicon oxide film include a thermal oxide film, PETEOS (Plasma Enhanced-TEOS) film, HDP (High Density Plasma Enhanced-TEOS) film and silicon oxide film obtained by thermal CVD.

The above thermal oxide film can be formed by exposing silicon heated at a high temperature to an oxidizing atmosphere in order to chemically react silicon with oxygen or silicon with water.

The above PETEOS film can be formed from tetraethyl orthosilicate (TEOS) by chemical vapor deposition using plasma for promoting a reaction.

The above HDP film can be formed from tetraethyl orthosilicate (TEOS) by chemical vapor deposition using high-density plasma for promoting a reaction.

The above silicon oxide film obtained by thermal CVD can be obtained by normal-pressure CVD (AP-CVD) or low-pressure CVD (LP-CVD).

The above boron phosphorus silicate (BPSG) film can be obtained by normal-pressure CVD (AP-CVD) or low-pressure CVD (LP-CVD).

The above insulating film called "FSG (Fluorine doped Silicate Glass)" can be formed by chemical vapor deposition using high-density plasma for promoting a reaction.

Further, the above silicon oxide-based insulating film having a low dielectric constant can be obtained by applying a raw material to a substrate by spin-coating and heating the coating film in an oxidizing atmosphere. Examples of the silicon oxide-based insulating film having a low dielectric constant include HSQ (Hydrogen Silsesquioxane) film comprising triethoxysilane, and MSQ (Methyl Silsesquioxane) film comprising methyl trimethoxysilane in addition to tetraethoxysilane. Insulating films having a low dielectric constant made of an organic polymer such as polyarylene-based polymer, polyarylene ether-based polymer, polyimide-based polymer or benzocyclobutene polymer may also be used.

The above barrier metal film 15 is made of tantalum, tantalum nitride, tungsten nitride, titanium or titanium nitride.

The above insulating film 13 and the stopper layer 22 are made of silicon nitride, et al.

The above wiring materials 16 and 33 are made of copper, aluminum or tungsten. Copper, aluminum and tungsten include not only pure metals but also alloys containing 90 % or more of the respective metals.

In the chemical mechanical polishing method of the present invention, polishing machines such as the EPO-112 and EPO-222 of Ebara Corporation, the LGP-510 and LGP-552 of Lap Master SFT Co., Ltd., the Mirra of Applied Material Co., Ltd., the Teres of Ram Research Co., Ltd., and the AVANTI 472 of Speed Fam-IPEC Co., Ltd. may be used.

In these polishing machines, the material to be polished is brought into slide contact with the surface of a polishing pad on which abrasive particles such as an aqueous dispersion for chemical mechanical polishing are dispersed, and while bringing into slide the aqueous dispersion for chemical mechanical polishing which is an abrasive is dropped from above (slurry feed unit, etc.) to polish the material. Preferably, this aqueous dispersion for chemical mechanical polishing suitable for each material to be polished is selected and the materials for forming this aqueous dispersion are not particularly limited. The materials include water, abrasive grains, oxidizing agent, alkali metal hydroxide and acid, ph modifier, surfactant and scratch preventing agent. They may be used alone or in combination of two or more.

### Examples

The following examples are given to further illustrate the present invention.

### Manufacture of polishing pad:

### Example 1

90 mass% of (a) 1,2-polybutadiene (JSR RB830 of JSR Corporation), 10 mass% of (b) maleic anhydride modified polypropylene (Umex 1010 having an acid value of 52 mg KOH/g of Sanyo Chemical Industries, Ltd.) and 5 vol% based on the total of the above components (a) and (b) of (c) β-cyclodextrin (Dexy Pearl β-100 of Bio Research Corporation of Yokohama) as a water-soluble substance were mixed together by a kneader heated at 120°C. Thereafter, an organic peroxide (Percumyl D40 of NOF Corporation) was added in an amount of 1 part by mass based on 100 parts by mass of the total of the above components (a) and (b) and further mixed. Then, a crosslinking reaction was carried out in a metal mold at 170°C for 18 minutes to mold a polishing pad having a diameter of 60 cm and a thickness of 2.8 mm (specific gravity of 0.95). Concentric grooves having a width of 0.5 mm, a pitch of 2 mm and a depth of 1.4 mm were formed in one surface of this molded product of the pad by a cutting machine (of Kato Machinery Co., Ltd.).

### Example 2

70 mass% of (a) 1,2-polybutadiene which was used in Example 1, 30 mass% of (b) a hydrogenated product of maleic anhydride modified styrene-butadiene-styrene block copolymer (trade name: Taftec 1911 having an acid value of 2 mg CH₃ONa/g (equivalent to 2.07 mg KOH/g) of Asahi Chemical Industry Co., Ltd.) and 20 vol% based on the total of the above components (a) and (b) of (c) the water-soluble substance which was used in Example 1 were mixed together by a kneader heated at 120°C. Thereafter, a polishing pad (specific gravity of 1.08) was obtained in the same manner as in Example 1 except that the organic peroxide which was used in Example 1 was added in an amount of 1 part by mass based on 100 parts by mass of the above component (a).

### Example 3

98 mass% of (a) 1,2-polybutadiene which was used in Example 1, 2 mass% of (b) maleic anhydride modified polypropylene (trade name: Umex 1001 having an acid value of 26 mg KOH/g of Sanyo Chemical Industries, Ltd.) and 1 vol% based on the total of the above components (a) and (b) of (c) the water-soluble substance which was used in Example 1 were mixed together by a kneader heated at 120°C. Thereafter, a polishing pad (specific gravity of 0.94) was obtained in the same manner as in Example 1 except that the organic peroxide which was used in Example 1 was added in an amount of 1 part by mass based on 100 parts by mass of the above component (a).

### Example 4

90 mass% of (a) 1,2-polybutadiene which was used in Example 1, 10 mass% of (b) maleic anhydride modified polyethylene (trade name: Umex 2000 having an acid value of 30 mg KOH/g of Sanyo Chemical Industries, Ltd.) and 5 vol% based on the total of the above components (a) and (b) of (c) the water-soluble substance which was used in Example 1 were mixed together by a kneader heated at 120°C. Thereafter, a polishing pad (specific gravity of 0.95) was obtained in the same manner as in Example 1 except that the organic peroxide which was used in Example 1 was added in an amount of 1 part by mass based on 100 parts by mass of the above component (a).

### Comparative Example 1

70 vol% of (a) 1,2-polybutadiene which was used in Example 1 and 30 vol% of (c) the water-soluble substance which was used in Example 1 were mixed together by a kneader heated at 120°C. Thereafter, a polishing pad (specific gravity of 0.96) was obtained in the same manner as in Example 1 except that the organic peroxide which was used in Example 1 was added in an amount of 1 part by mass based on 100 parts by mass of the above component (a).

### Comparative Example 2

99 mass% of (a) 1,2-polybutadiene which was used in Example 1, 1 mass% of (b) polybutadiene having a hydroxyl group at both terminals (trade name: NISSO-PB G3000 of Nippon Soda Co., Ltd.) and 30 vol% based on the total of the above components (a) and (b) of (c) the water-soluble substance which was used in Example 1 were mixed together by a kneader heated at 120°C. Thereafter, a polishing pad (specific gravity of 1.07) was obtained in the same manner as in Example 1 except that the organic peroxide which was used in Example 1 was added in an amount of 1 part by mass based on 100 parts by mass of the total of the above components (a) and (b).

### Comparative Example 3

Butadiene, acrylonitrile, methacrylic acid, 2-hydroxybutyl methacrylate, ethylene glycol dimethacrylate and divinylbenzene were emulsion polymerized in a molar ratio of 62/20/5/11/1/2 in the presence of sodium laurylsulfate as an emulsifier and benzoyl peroxide as a polymerization initiator. The obtained copolymer emulsion was then solidified and dried to prepare a copolymer having a functional group (d). The polymerization conversion was almost 100 %.

Thereafter, 90 mass% of (a) 1,2-polybutadiene which was used in Example 1, 8 mass% of (e) polybutadiene rubber (trade name: BR01 of JSR Corporation), 2 mass% of (d) the above prepared copolymer having a functional group and 30 vol% based on the total of the above components (a), (d) and (e) of (c) the water-soluble substance which was used in Example 1 were mixed together by a kneader heated at 120°C. Thereafter, a polishing pad (specific gravity of 1.05) was obtained in the same manner as in Example 1 except that the organic peroxide which was used in Example 1 was added in an amount of 1 part by mass based on 100 parts by mass of the total of the above components (a), (d) and (e).

### Evaluation of polishing efficiency:

### (1) evaluation of removal rate

The polishing pads obtained in Examples 1 to 4 and Comparative Examples 1 to 3 were each set on the platen of a polishing machine (Lap Master LGP510 of SFT Co., Ltd.), copper film and silica film wafers were polished at a platen revolution of 50 rpm and a slurry flow rate of 100 ml/min to evaluate differences in polishing efficiency among the polishing pads, and the obtained results are shown in Tables 1 and 2. The CMS1101 (of JSR Corporation) was used as slurry for the thermal oxide film wafer (silica) and the iCUe5003 (of Cabot Co., Ltd.) was used as slurry for the copper film wafer. The removal rate was obtained by measuring a change in film thickness with an optical film thickness meter.

### (2) evaluation of dishing

Semiconductor wafers (polishing test wafers which differ in wiring width and space width: trade name: SKW-7 of SKW Co., Ltd.) were polished under the following conditions and the dishings of the semiconductor wafers were measured at line-and-space distances of 250 µm and 250 µm by a Profilar (P-10 of KLA-Tencor Ltd.). The results are shown in Table 1.
Slurry; CMS1101 (JSR Corporation)
Chemical mechanical polishing machine: EP0112 (Ebara Corporation)
Slurry flow rate; 200 ml/min
Polishing load; 400 g/cm²
Platen revolution; 70 rpm
Head revolution; 70 rpm
Removal rate; 400 nm/min
Polishing time; 5.75 minutes (15 % overpolishing)

**Table 1**

| | Removal rate of thermal oxide film (Å/min) | Removal rate of Cu film (Å/min) | Dishing (nm) | Acid value of component B (mg KOH/g) | Shore D hardness |
|---|---|---|---|---|---|
| Ex. 1 | 1850 | 5300 | 40 | 52 | 63 |
| C.Ex. 1 | 1050 | 3000 | 180 | - - | 72 |
| C.Ex. 2 | 1340 | 3300 | 110 | - | 71 |
| C.Ex. 3 | 1440 | 4000 | 95 | - | 68 |

Ex.: Example C.Ex.: Comparative Example

**Table 2**

| | Removal rate of thermal oxide film (Å/min) | Removal rate of Cu film (Å/min) | Dishing (nm) | Shore D hardness |
|---|---|---|---|---|
| Ex. 2 | 1920 | 5830 | 50 | 65 |
| Ex. 3 | 1650 | 5170 | 50 | 60 |
| Ex. 4 | 1750 | 5250 | 40 | 62 |

Ex.: Example

According to Table 1, the removal rates of a silica film and a copper film with the polishing pad of Comparative Example 1 in which none of acid anhydride group, carboxyl group or hydroxyl group was contained were 1,050 Å/min and 3, 000 Å/min, respectively. In Comparative Example 2 in which polybutadiene having a hydroxyl group at both terminals was used, the removal rates of a silica film and a copper film were 1,340 Å/min and 3,300 Å/min, respectively. In Comparative Example 3 in which a copolymer having a carboxyl group was used, the removal rates of a silica film and a copper film were 1,440 Å/min and 4,000 Å/min, respectively.

In Example 1 in which a polymer having an acid anhydride group was contained, the removal rates of a silica film and a copper film were 1,850 Å/min and 5,300 Å/min which were 1.76 times and 1.76 times those of Comparative Example 1, respectively. Further, in Comparative Examples 2 and 3, the removal rates of a silica film and a copper film were higher than those of Comparative Example 1 in which no functional group was contained but lower than those of Example 1. That is, the removal rates of Example 1 were 1.38 times and 1.60 times higher than those of Comparative Example 2 and 1.28 times and 1.33 times higher than those of Comparative Example 3.

The dishing of Comparative Example 1 was 180 nm (4.5 times that of Example 1), the dishing of Comparative Example 2 was 110 nm (2.75 times that of Example 1), the dishing of Comparative Example 3 was 95 nm (1.33 times that of Example 1) and the dishing of Example 1 was extremely small at 40 nm.

It is understood from above that the polishing pad of Example 1 has a higher removal rate for both a silica film and a copper film and small dishing. Thus, it was found that the polishing pad of Example 1 has excellent polishing efficiency.

It is understood from Table 2 that the polishing pads of Examples 2 to 4 have the same excellent properties as the polishing pad of Example 1.

As described above, it is seen that the polishing pad of the present invention has a high removal rate and excellent polishing efficiency for both an insulating film and a metal film.

## Claims

1. A polishing pad comprising 70 to 99.9 mass% of (A) a crosslinked diene elastomer and 0.1 to 30 mass% of (B) a polymer having an acid anhydride structure based on 100 mass% of the total of the components (A) and (B), the polishing pad having a specific gravity of 0.9 to 1.2, wherein the acid value of said polymer (B) is 1 to 300 mg KOH/g.

2. The polishing pad of claim 1, wherein the crosslinked diene elastomer (A) is a crosslinked butadiene elastomer or crosslinked isoprene elastomer.

3. The polishing pad of claim 1, wherein the polymer having an acid anhydride structure (B) is a polymer having an acid anhydride structure only in the main chain, a polymer having an acid anhydride structure only in the side chain or a polymer having an acid anhydride structure in both the main chain and the side chain.

4. The polishing pad of claim 3, wherein the polymer having an acid anhydride structure only in the main chain is a (co)polymer of at least one unsaturated dicarboxylic anhydride selected from the group consisting of maleic anhydride, itaconic anhydride, citraconic anhydride and endomethylenetetrahydrophthalic anhydride, or a copolymer of at least one unsaturated dicarboxylic anhydride and a monomer having no acid anhydride structure.

5. The polishing pad of claim 3, wherein the polymer having an acid anhydride structure only in the side chain is a polymer obtained by modifying a polymer having no acid anhydride structure with at least one unsaturated dicarboxylic anhydride selected from the group consisting of maleic anhydride, itaconic anhydride, citraconic anhydride and endomethylenetetrahydrophthalic anhydride.

6. The polishing pad of claim 3 or 5, wherein the polymer having an acid anhydride structure only in the side chain is maleic anhydride modified polyethylene, maleic anhydride modified polypropylene or maleic anhydride modified styrene-butadiene copolymer.

7. The polishing pad of claim 3, wherein the polymer having an acid anhydride structure in both the main chain and the side chain is a polymer obtained by modifying a polymer having an acid anhydride structure only in the main chain with at least one unsaturated dicarboxylic anhydride selected from the group consisting of maleic anhydride, itaconic anhydride, citraconic anhydride and endomethylenetetrahydrophthalic anhydride.

8. The polishing pad of claim 1, wherein the crosslinked diene elastomer (A) and the polymer having an acid anhydride structure (B) form a matrix material and a water-soluble substance (C) is further contained in the matrix material.

9. A chemical mechanical polishing method comprising flattening the surface of a material to be polished by chemical mechanical polishing with the polishing pad of claim 1 to attain the formation of a buried metal wiring or the isolation of a micro-device.

## Patentansprüche

1. Polierkissen mit 70 bis 99,9 Massen-% von (A) einem vernetzten Dienelastomer und 0,1 bis 30 Massen-% von (B) einem Polymer mit einer Säureanhydridstruktur auf der Grundlage von 100 Massen-% der Gesamtheit der Bestandteile (A) und (B), wobei das Polierkissen eine relative Dichte von 0,9 bis 1,2 hat, wobei der Säurewert des Polymers (B) 1 bis 300 mg KOH/g ist.

2. Polierkissen nach Anspruch 1, wobei das vernetzte Dienelastomer (A) ein vernetztes Butadienelastomer oder ein vernetztes Isoprenelastomer ist.

3. Polierkissen nach Anspruch 1, wobei das Polymer mit einer Säureanhydridstruktur (B) ein Polymer ist, dass eine Säureanhydridstruktur nur in der Hauptkette hat, ein Polymer ist, das eine Säureanhydridstruktur nur in der Seitenkette hat, oder ein Polymer ist, das eine Säureanhydridstruktur sowohl in der Hauptkette als auch der Nebenkette hat.

4. Polierkissen nach Anspruch 3, wobei das Polymer, das eine Säureanhydridstruktur nur in der Hauptkette hat, ein (Co)-Polymerisat ist von wenigstens einem ungesättigten Dicarbonsäureanhydrid ausgewählt aus der Gruppe bestehend aus Maleinsäureanhydrid, Itaconsäureanhydrid, Citraconsäureanhydrid und Endomethylentetrahydrophthalsäureanhydrid, oder ein Copolymerisat ist von wenigstens einem ungesättigten Dicarbonsäureanhydrid und einem Monomer, das keine Säureanhydridstruktur hat.

5. Polierkissen nach Anspruch 3, wobei das Polymer, das eine Säureanhydridstruktur nur in der Seitenkette hat, ein Polymer ist, das durch Modifikation eines Polymers ohne Säureanhydridstruktur mit wenigstens einem ungesättigten Dicarbonsäureanhydrid ausgewählt aus der Gruppe bestehend aus Maleinsäureanhydrid, Itaconsäureanhydrid, Citraconsäureanhydrid und Endomethylentetrahydrophthalsäureanhydrid erhalten wird.

6. Polierkissen nach Anspruch 3 oder 5, wobei das Polymer, das eine Säureanhydridstruktur nur in der Seitenkette hat, ein Maleinsäureanhydrid-modifiziertes Polyethylen, ein Maleinsäureanhydrid-modifiziertes Polypropylen oder ein Maleinsäureanhydrid-modifiziertes Styrol-Butadien-Copolymer ist.

7. Polierkissen nach Anspruch 3, wobei das Polymer, das eine Säureanhydridstruktur sowohl in der Hauptkette als auch der Seitenkette hat, ein Polymer ist, das durch die Modifikation eines Polymers mit einer Säureanhydridstruktur nur in der Hauptkette mit wenigstens einem ungesättigten Dicarbonsäureanhydrid ausgewählt aus der Gruppe bestehend aus Maleinsäureanhydrid, Itaconsäureanhydrid, Citraconsäureanhydrid und Endomethylentetrahydrophthalsäureanhydrid erhalten wird.

8. Polierkissen nach Anspruch 1, wobei das vernetzte Dienelastomer (A) und das Polymer mit einer Säureanhydridstruktur (B) ein Matrixmaterial bilden, und zusätzlich eine wasserlösliche Substanz (C) in dem Matrixmaterial enthalten ist.

9. Chemisch-mechanisches Polierverfahren mit Glätten der Oberfläche eines zu polierenden Materials durch chemisch-mechanisches Polieren mit dem Polierkissen des Anspruchs 1, um die Bildung einer verdeckten Metallleitung oder die Isolierung einer Mikro-Vorrichtung zu erreichen.

## Revendications

1. Tampon de polissage comprenant 70 à 99,9 % en masse de (A) un élastomère diénique réticulé et 0,1 à 30 % en masse de (B) un polymère ayant une structure d'anhydride d'acide, pour 100 % en masse du total des composants (A) et (B), le tampon de polissage ayant une densité de 0,9 à 1,2, où l'indice d'acide dudit polymère (B) est de 1 à 300 mg de KOH/g.

2. Tampon de polissage selon la revendication 1, dans lequel l'élastomère diénique réticulé (A) est un élastomère de butadiène réticulé ou un élastomère d'isoprène réticulé.

3. Tampon de polissage selon la revendication 1, dans lequel le polymère ayant une structure d'anhydride d'acide (B) est un polymère ayant une structure d'anhydride d'acide uniquement dans la chaîne principale, un polymère ayant une structure d'anhydride d'acide uniquement dans la chaîne latérale ou un polymère ayant une structure d'anhydride d'acide à la fois dans la chaîne principale et dans la chaîne latérale.

4. Tampon de polissage selon la revendication 3, dans lequel le polymère ayant une structure d'anhydride d'acide uniquement dans la chaîne principale est un (co)polymère d'au moins un anhydride dicarboxylique insaturé choisi dans le groupe constitué par l'anhydride maléique, l'anhydride itaconique, l'anhydride citraconique et l'anhydride endo-méthylènetétrahydrophtalique, ou un copolymère d'au moins un anhydride dicarboxylique insaturé et d'un monomère n'ayant pas une structure d'anhydride d'acide.

5. Tampon de polissage selon la revendication 3, dans lequel le polymère ayant une structure d'anhydride d'acide uniquement dans la chaîne latérale est un polymère obtenu par modification d'un polymère n'ayant pas de structure d'anhydride d'acide avec au moins un anhydride dicarboxylique insaturé choisi dans le groupe constitué par l'anhydride maléique, l'anhydride itaconique, l'anhydride citraconique et l'anhydride endo-méthylènetétrahydrophtalique.

6. Tampon de polissage selon la revendication 3 ou 5, dans lequel le polymère ayant une structure d'anhydride d'acide uniquement dans la chaîne latérale est du polyéthylène modifié par de l'anhydride maléique, du polypropylène modifié par de l'anhydride maléique ou un copolymère styrène-butadiène modifié par de l'anhydride maléique.

7. Tampon de polissage selon la revendication 3, dans lequel le polymère ayant une structure d'anhydride d'acide à la fois dans la chaîne principale et dans la chaîne latérale est un polymère obtenu par modification d'un polymère ayant une structure d'anhydride d'acide uniquement dans la chaîne principale avec au moins un anhydride dicarboxylique insaturé choisi dans le groupe constitué par l'anhydride maléique, l'anhydride itaconique, l'anhydride citraconique et l'anhydride endo-méthylènetétrahydrophtalique.

8. Tampon de polissage selon la revendication 1, dans lequel l'élastomère diénique réticulé (A) et le polymère ayant une structure d'anhydride d'acide (B) forment un matériau de matrice et une substance soluble dans l'eau (C) est en outre présente dans le matériau de matrice.

9. Procédé de polissage mécano-chimique comprenant l'aplanissement de la surface d'un matériau à polir par un polissage mécano-chimique avec un tampon de polissage selon la revendication 1, pour obtenir la formation d'un câblage métallique noyé ou l'isolation d'un micro-dispositif.
